Europäisches Patentamt

European Patent Office

Office européen des brevets

(19)

(11) **EP 0 659 541 B1**

(12) **FASCICULE DE BREVET EUROPEEN**

(45) Date de publication et mention
de la délivrance du brevet:
**15.04.1998 Bulletin 1998/16**

(51) Int. Cl.$^6$: **B29C 70/44**, B29C 70/54

(21) Numéro de dépôt: **94450009.9**

(22) Date de dépôt: **19.12.1994**

(54) **Procédé et dispositif de fabrication de pièces stratifiées injectées basse pression, notamment à emboutis profonds**

Verfahren und Vorrichtung zur Herstellung von mehrschichtigen, unter niedrigen Druck imprägnierten Gegenständen, insbesondere mit tiefen Unterschneidungen

Process and apparatus for manufacturing multilayered, low pressure impregnated articles particularly having deep undercuts

(84) Etats contractants désignés:
**DE ES GB IT NL**

(30) Priorité: **21.12.1993 FR 9315766**

(43) Date de publication de la demande:
**28.06.1995 Bulletin 1995/26**

(73) Titulaire:
**AEROSPATIALE Société Nationale Industrielle**
**75781 Paris Cédex 16 (FR)**

(72) Inventeurs:
• **Fournier, Alain**
**F-31470 Saint Lys (FR)**

• **Gimbrede, Serge**
**F-31770 Colomiers (FR)**

(74) Mandataire: **Thébault, Jean-Louis**
**Cabinet Thébault**
**111 cours du Médoc**
**33300 Bordeaux (FR)**

(56) Documents cités:
**DE-A- 1 629 479**     **FR-A- 2 673 571**
**GB-A- 2 267 457**     **US-A- 4 942 013**
**US-A- 5 123 985**

Printed by Xerox (UK) Business Services
2.16.1/3.4

## Description

La présente invention a trait à la fabrication de pièces constituées de renforts fibreux, par exemple des tissus ou nappes de fibres de verre ou de carbone, imprégnés de résine thermodurcissable.

On sait déjà, suivant les enseignements du document DE-1.629.479, fabriquer une pièce en fibres de verre imprégnées d'une résine thermodurcissable, à l'aide d'un dispositif de moulage constitué d'un corps de moulage recouvert de manière étanche d'un couvercle avec interposition entre les deux parties d'une membrane souple déformable.

Les fibres de verre sont placées dans le corps de moule, le couvercle est fermé et, par l'action conjuguée d'une pression appliquée sur la face de la membrane tournée vers le couvercle et d'un vide appliqué sur l'autre face grâce à des canaux traversant le corps de moule et aboutissant à la paroi de moule sur laquelle sont placées les fibres, ladite membrane est plaquée contre le matelas de fibres qui est mis en forme tout en faisant pénétrer, par aspiration, de la résine dans les fibres, après quoi une polymérisation est effectuée.

Une mise en oeuvre d'un tel processus est par ailleurs exposée dans le document FR-2.673.571 qui décrit un dispositif de moulage comprenant un couvercle muni d'une membrane mince plane qui est, à la mise en place et fermeture du couvercle sur un corps de moule présentant sur sa face supérieure une empreinte garnie préalablement par exemple de nappes de tissus de verre appropriées, liées entre elles, plaquée contre un bourrelet en saillie autour et au dessus de l'orifice de ladite empreinte. Après quoi, on fait le vide dans l'empreinte pour plaquer la membrane contre l'empilage des nappes de tissus, puis, par des canaux appropriés, on injecte de la résine aspirée par le vide régnant dans la cavité de moulage.

Ensuite, à des fins de compactage, on envoie une pression de fluide dans le couvercle et donc sur la face externe de la membrane en laissant s'échapper l'excédent de résine par les canaux d'aspiration.

Un tel procédé présente toutefois un certain nombre d'inconvénients.

Les tissus superposés dans le corps de moule étant secs et non solidaires les uns des autres, le plaquage de la membrane sur ces tissus peut entraîner des étirements non uniformes de la membrane provoquant localement des glissements entre couches générateurs de plis et/ou de déplacement des tissus à la périphérie susceptible d'aboutir à l'obturation par la membrane du ou des canaux d'injection de résine ou d'aspiration. Le couvercle, totalement opaque, oblige une fois refermé à un travail en aveugle qui ne permet de faire aucun contrôle de l'apparition ou non de tels plis ou déplacements.

Par ailleurs, cette technique ne permet de réaliser que des pièces à faible embouti, n'entraînant pas d'allongement trop important de la membrane susceptible de provoquer sa rupture.

De plus, les risques importants d'étirement non homogène de la membrane entraînent des risques de pressions non homogènes sur les tissus et donc de cheminements préférentiels de la résine dans la masse des tissus. Ceci peut aboutir à des taux de résine différents dans les rayons, les angles en particulier. Le compactage n'est donc pas parfait.

Enfin, puisque la résine est introduite sous la seule action du vide et avant compactage, il faut utiliser une plus grande quantité de résine pour, ensuite, la chasser, de façon non-uniforme, lors du compactage final, ce qui n'est pas rationnel.

La présente invention vise à proposer une technique de fabrication de pièces stratifiées de fibres imprégnées de résine thermodurcissable, pouvant présenter des emboutis profonds, capable d'obtenir une imprégnation et un compactage excellents du matériau composite, sans formation de plis ou déplacements dans l'empilement des tissus ou nappes de fibres.

A cet effet, l'invention a pour objet un procédé de fabrication de pièces stratifiées injectées basse pression, notamment à emboutis profonds, dans lequel on place des fibres en couches de tissu ou nappes superposées dans un moule, on ferme le moule par une membrane souple portée par un couvercle de fermeture étanche du moule, la face de la membrane tournée vers les fibres étant susceptible d'être soumise à un vide et, l'autre face, à une pression, de manière à plaquer la membrane contre les fibres, en vue d'injecter de la résine dans ces dernières à l'aide dudit vide, caractérisé en ce que, préalablement, la membrane, de préférence avant fermeture du couvercle, est sur sa face tournée vers ce dernier soumise à un vide plaquant la membrane sur une contre-forme de façon à conférer à la membrane, au moins provisoirement, des étirements locaux plus ou moins importants en correspondance avec la situation et l'importance des creux de l'empreinte de moulage, puis, on effectue, le couvercle étant en place sur le moule, les étapes suivantes :

- on supprime ledit vide et, simultanément, on applique un vide déterminé sur la face de la membrane tournée vers le moule et une pression d'une première valeur sur l'autre face,
- ensuite, on injecte sous pression la résine dans le moule tout en maintenant celui-ci sous vide,
- puis, dès remplissage en résine du moule, on isole ce dernier vis à vis de la résine et de la source de vide, et
- enfin, on porte la pression régnant sur la face externe de la membrane à une seconde valeur supérieure à la première, pendant un temps déterminé, à des fins de compactage final.

Un tel procédé permet à la membrane de mieux s'appliquer en particulier dans les parties en creux de la face du matelas de fibres à recouvrir, du fait que dans ces zones la membrane est localement distendue en correspondance avec l'étendue et l'importance desdits creux, ce qui assure un contact entre fibres et membrane pratiquement sans glissement de cette dernière susceptible d'entraîner des plis ou déplacements de la couche superficielle de fibres ou de l'ensemble de l'empilage.

On garantit ainsi non seulement l'absence de plis locaux superficiels mais également l'intégrité des orifices des canaux d'application du vide et d'injection de résine dans la masse des fibres, ces orifices ne risquant plus d'être découverts par suite d'un déplacement du matelas de fibres et obturés par la membrane.

En outre, la pression exercée par la membrane est plus homogène sur toute la surface du matelas de fibres si bien que la diffusion de la résine dans la masse de fibres sera plus homogène.

Enfin, le compactage final sera également plus homogène et d'une excellente qualité.

Avantageusement, la mise en place des fibres dans le moule est réalisée par la confection dans l'empreinte de moulage d'une pré-forme de la pièce à obtenir à l'aide de tissus superposés, liés entre eux et découpés aux dimensions de la pièce, les tranches du matelas de tissus ainsi obtenu étant recouvertes de couvre-joints, cependant que les canaux d'injection de résine et d'application de vide dans le moule débouchent dans l'empreinte de moulage au voisinage immédiat desdites tranches. On garantit de la sorte, de manière parfaite, l'absence de glissement des tissus ainsi que la protection des orifices des canaux d'injection et aspiration de résine.

D'autres caractéristiques et avantages ressortiront de la description qui va suivre du procédé de l'invention, ainsi que de l'ensemble de moulage propre à sa mise en oeuvre, description donnée à titre d'exemple uniquement et en regard des dessins annexés sur lesquels :

- Figure 1 est une vue en éclaté et en coupe verticale d'un dispositif de moulage selon l'invention ;
- Figures 2 à 4 illustrent respectivement les étapes de confection d'une pré-forme, mise en place de couvre-joints et fermeture du moule ;
- Figures 5 à 8 illustrent les phases successives du procédé suivantes : pré-étirage de la membrane, plaquage de la membrane sur la pré-forme, injection de la résine et compactage final, et
- Figure 9 représente en coupe verticale un ensemble de moulage selon l'invention permettant la réalisation simultanée de deux pièces identiques.

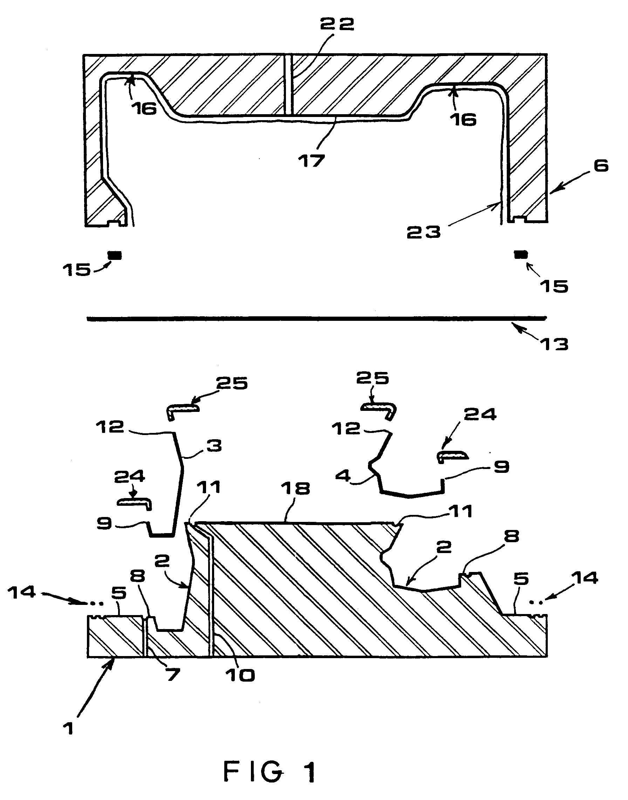

Sur la figure 1 on a représenté schématiquement un ensemble ou outillage de moulage conforme à l'invention.

Cet outillage comprend un corps de moule 1 métallique, usiné pour constituer une empreinte de moulage 2 d'une pièce en trois dimensions à paroi mince, par exemple un entourage de hublot d'avion dont on a représenté seulement deux sections 3 et 4 en deux endroits opposés dudit entourage, le corps de moule 1 étant alors réalisé en plusieurs parties assemblables, à des fins de démoulage. Cette pièce est constituée d'un empilage ou matelas de tissus de verre ou de carbone par exemple, imprégnés d'une résine thermodurcissable et est réalisée par injection basse-pression de résine et polymérisation.

L'empreinte 2 est usinée en correspondance avec la face interne de la pièce 3,4.

Le corps de moule 1 est bordé d'un trottoir périphérique 5 susceptible de recevoir le bord d'un couvercle 6, également métallique.

Le moule 1 est percé d'un premier canal 7 communiquant avec un listel 8 bordant l'empreinte 2 au droit du rebord inférieur 9 de la pièce 3,4 et d'un second canal 10 communiquant avec un listel 11 bordant l'empreinte 2 au droit du rebord supérieur 12 de ladite pièce.

Le couvercle 6 peut être appliqué contre le trottoir 5 avec interposition d'une membrane mince, souple et déformable 13, l'étanchéité étant assurée, côté moule 1, par des joints 14 et, côté couvercle 6, par un cordon de mastic 15, lequel assure également la fixation par adhérence de la membrane 13 au couvercle 6.

Le couvercle 6 est creux et sa face interne est conformée sensiblement en contre-forme de l'empreinte 2 du moule. Dans le cas de la pièce 3,4 qui est de forme annulaire, la contre-forme réalisée dans la paroi interne du couvercle présente l'aspect d'une gorge circulaire 16 dont la largeur et la profondeur varient localement en correspondance avec l'empreinte 2. La gorge 16 entoure une partie centrale plane 17 correspondant à la partie centrale plane 18 du moule entourée par l'empreinte 2.

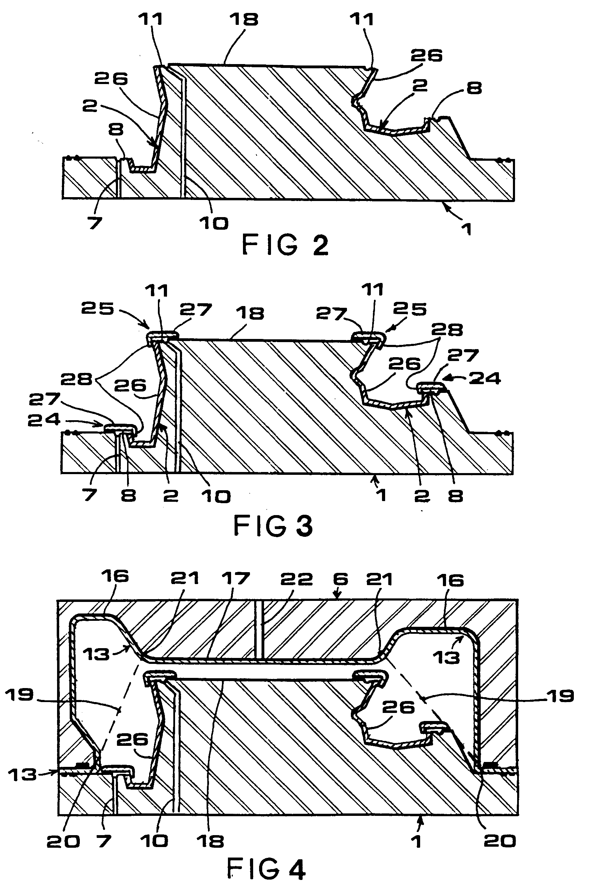

Plus précisément encore, lorsque l'on observe le couvercle 6 en place sur le moule 1 (par exemple figure 4), si l'on considère une ligne fictive 19 reliant le bord interne 20 du couvercle 6 au rebord 21 du plateau 17, on constate que le profil de la gorge 16 est, en section, très approximativement le symétrique de celui de l'empreinte 2 par rapport au centre de ladite ligne 19. La contre-forme 16 est en quelque sorte une image ou réplique grossière de l'empreinte 2.

Sur la figure 1 on a représenté par ailleurs, dans la partie centrale du couvercle 6, un canal 22 pour appliquer à l'intérieur du couvercle le vide ou la pression désirée. En outre, en 23 est représenté schématiquement un tissu de drainage du vide évitant à la membrane 13 d'obturer l'orifice du canal 22 lorsque ce dernier est branché à une source de vide.

Enfin, en 24 et 25 sont représentés en section respectivement un couvre-joint inférieur et un couvre-joint supérieur destinés à recouvrir et protéger respectivement le listel inférieur 8 et le listel supérieur 11. Les couvre-joints 24 et 25 sont éventuellement en plusieurs tronçons bout à bout.

La figure 2 illustre l'étape de réalisation d'une préforme dans l'empreinte 2 par dépose d'un certain nombre de couches superposées de tissu de verre par exemple et de préférence liées entre elles.

Ensuite, les tissus du matelas 26 ainsi constitué sont découpés au ras des listels inférieur 8 et supérieur 11, puis les listels ainsi que les deux tranches inférieure et supérieure du matelas 26, sont recouverts par les couvre-joints 24 et 25 respectivement. Les couvre-joints comportent une partie plane 27 recouvrant les listels et un bord tombé 28 rabattu contre la lisière du matelas pré-forme 26.

La membrane 13 est un film d'une matière élastique reprenant tout ou partie de ses dimensions initiales après étirement, d'une épaisseur de quelques dizaines de micromètres et susceptible de résister à des températures de l'ordre de 200°C.

Par exemple, on peut utiliser pour constituer une membrane 13 le film commercialisé sous la référence DIABAG 80 HT par la Société DIATEX et présentant une épaisseur de 50 micromètres et un allongement de 500 %, ou encore le film d'élastomère commercialisé sous la référence VACFILM 750 par la Société AEROVAC SYSTEME FRANCE et présentant une épaisseur de 75 micromètres et un allongement de 750 %, ou bien encore le film à base d'uréthane commercialisé sous la référence TEN 357 par la Société CONSORTIUM INTERNATIONAL PHARMACEUTIQUE ET CHIMIQUE et présentant une épaisseur de 75 micromètres et un allongement de 1000 %.

La membrane 13 est tout d'abord fixée, grâce au cordon de mastic 15, sur la tranche du couvercle 6, puis, de préférence avant mise en place du couvercle sur le moule 1, le canal 22 est relié à une source de vide afin de plaquer la membrane 13 sur la paroi interne du couvercle 6, comme illustré par la figure 4 sur laquelle le tissu de drainage du vide 23 n'est pas représenté par souci de clarté.

En se plaquant contre la gorge 16, la membrane 13 s'étire localement suivant des taux variables en fonction de l'endroit.

Le couvercle 6 est ensuite mis en place sur le moule 1 et pressé de manière étanche, par exemple à l'aide de brides (non représentées) ou en plaçant l'ensemble de moulage entre les plateaux d'une presse. On pourrait, en variante, placer d'abord le couvercle sur le moule, puis étirer la membrane contre la paroi interne du couvercle, mais l'étirage de la membrane avant la mise en place du couvercle présente l'avantage de permettre de déceler d'éventuels mauvais comportements de la membrane.

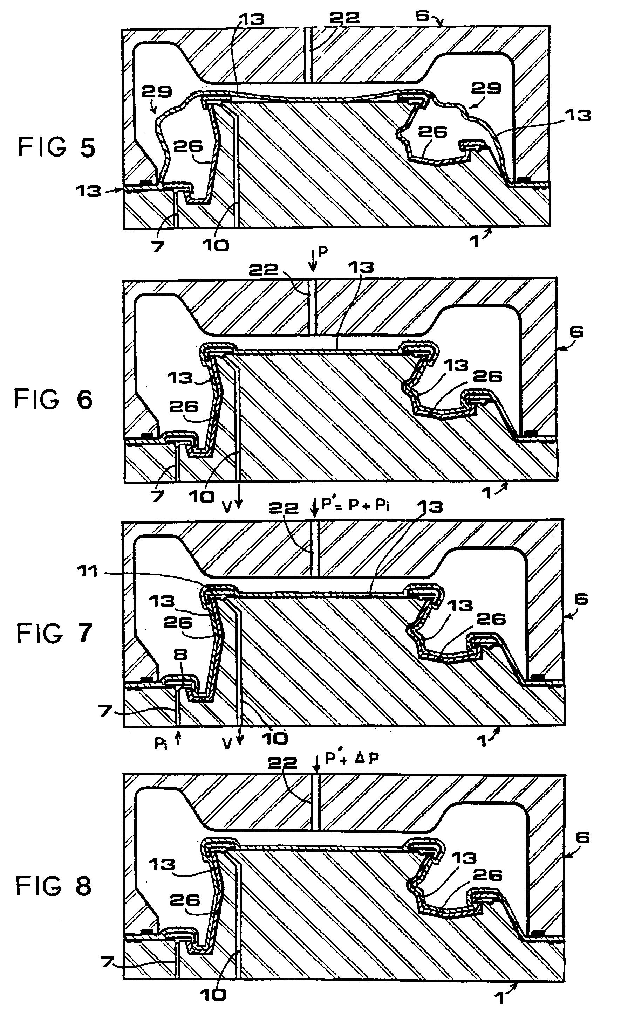

La phase suivante consiste à supprimer le vide dans le canal 22 (figure 5), ce qui fait se relâcher la membrane 23 qui présente alors en regard de la pré-forme 26 des parties distendues comme illustré en 29 sur ladite figure 5.

Dans la foulée, une pression de fluide (de l'air par exemple) de valeur P est appliquée dans le canal 22 (figure 6) et, simultanément, un vide V est appliqué au canal 10 du moule débouchant sur le listel supérieur 11.

La conjonction des deux assure, grâce aux distensions locales 29 de la membrane 13, un plaquage de cette dernière contre la face externe de la pré-forme 26 de manière bien régulière, sans contrainte locale de friction entre la membrane et la couche de tissu superficielle de la pré-forme 26 et, ce, même avec des formes de pièce comportant des emboutis profonds ou tourmentés.

Le matelas de fibres 26 est par ailleurs comprimé de manière homogène sur toute sa surface, ce qui contribuera à une distribution homogène d'une résine de polymérisation appropriée que l'on introduit alors (figure 7) par injection sous une pression Pi dans le canal 7, le canal 10 étant toujours relié à la source de vide.

Simultanément à l'injection de la résine, la pression régnant au dessus de la membrane 13 est portée à une valeur $P' = P + Pi$, pour compenser la pression d'injection Pi de la résine.

Enfin, dès que l'excédent de résine est détecté à la sortie du canal 10, le moule 1 est isolé (figure 8) en interrompant les communications entre les canaux 7 et 10 et les sources de résine et de vide, cependant que simultanément une surpression $\triangle P$ est appliquée par le canal 22 à la pression P', pendant un temps pré-déterminé, en vue d'effectuer un compactage final de la pré-forme dûment et complètement imprégnée de résine.

La polymérisation de la résine est ensuite effectuée par exemple in situ, c'est-à-dire dans le moule à l'aide d'un fluide chauffant, le moule étant également chauffant et la membrane 13 étant de nature à supporter les températures mises en oeuvre. La polymérisation peut aussi être réalisée en autoclave, le couvercle 6 et la membrane 13 étant retirés.

Le procédé de l'invention permet d'obtenir des compactages et des taux de diffusion de résine dans la pré-forme 26 remarquablement homogènes et élevés.

L'injection de la résine en partie basse de la pièce (listel inférieur 8) et l'aspiration de cette même résine par le haut, via le listel supérieur 11, supprime tous risques de manque de résine et de bullage.

D'autre part, le fait de découper le matelas pré-forme 26 au ras des listels 8,11 et de prévoir des couvre-joints 24,25 plaqués en regard des tranches de la pré-forme 26 et desdits listels, permet de confectionner des pré-formes 26 à des cotes précises, notamment des cotes finies, la pièce moulée, une fois sortie du moule, ne requérant qu'un simple ébavurage sur ses deux tranches pour éliminer la seule résine attachée à la pièce et accumulée au niveau des listels 8 et 11.

Au lieu d'un seul canal 10 d'aspiration de résine débouchant au ras du listel supérieur 11, on peut prévoir un canal central dans le corps de moule 1 alimentant plusieurs canaux radiaux aboutissant à différents endroits dudit listel 11, à des fins de meilleure diffusion de la résine dans la masse de la pré-forme 26.

Il est à noter que la membrane 13 peut être réutilisée pour un même moulage de pièces.

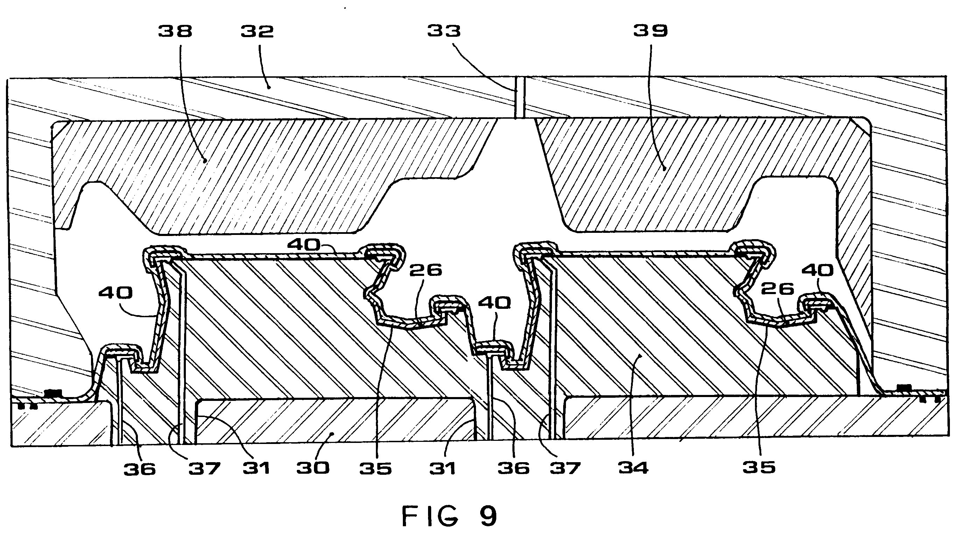

Le procédé de l'invention permet de réaliser des moules à vocation polyvalente comprenant, comme illustré par la figure 9, un socle standard 30 muni d'un ou plusieurs passages 31 et un couvercle standard 32 muni d'un ou plusieurs canaux 33.

Sur le socle 30 peut être rapporté un corps de moule 34 muni par exemple de deux empreintes identiques 35 côte à côte, chacune avec ses canaux 36,37 d'injection de résine et d'aspiration.

Dans le couvercle 32 sont rapportées des formes 38,39 définies et usinées par ailleurs dans une matière appropriée, en vue de constituer des contre-formes appropriées aux empreintes 35.

Les formes 38,39 peuvent être modifiées ou enlevées et remplacées par d'autres correspondant à d'autres empreintes que les empreintes 35, également amovibles.

Avec l'outillage représenté en figure 9 on peut réaliser simultanément, avec une seule membrane 40, analogue à la membrane 13, avec une source de vide/pression unique pour le canal 35, une même source d'injection de résine et une même source d'aspiration, deux pièces identiques (ou non). Le principe peut bien entendu s'étendre à plus de deux pièces.

Enfin, l'invention n'est évidemment pas limitée aux modes de mise en oeuvre du procédé et de réalisation de l'outillage approprié à ce procédé, mais en couvre au contraire toutes les variantes, notamment en ce qui concerne les nature, dimensions et caractéristiques de la membrane 13, les conditions (valeurs, durées) d'application des vides et pressions de fluide nécessaires à la mise en oeuvre du procédé, ainsi que le processus de confection de la pré-forme 26 selon le type de pièce à réaliser. Par ailleurs, le procédé de l'invention peut s'appliquer à des pièces en matériau composite de formes très diverses, à paroi mince ou non, d'égale épaisseur ou non, et quelles que soient la nature des fibres de renfort, leur agencement (tissu, nappes non tissées, fibres alignées ou non, etc...) et la nature de la résine de polymérisation.

**Revendications**

1. Procédé de fabrication de pièces stratifiées injectées basse pression, notamment à emboutis profonds, dans lequel on place des fibres en couches de tissu ou nappes superposées (26) dans un moule (1,2), on ferme le moule par une membrane souple (13) portée par un couvercle (6) de fermeture étanche du moule, la face de la membrane tournée vers les fibres étant susceptible d'être soumise à un vide et, l'autre face, à une pression, de manière à plaquer la membrane (13) contre les fibres (26), en vue d'injecter de la résine dans ces dernières à l'aide dudit vide, caractérisé en ce que, préalablement, la membrane (13), de préférence avant fermeture du couvercle (6), est sur sa face tournée vers ce dernier soumise à un vide plaquant la membrane sur une contre-forme (16) de façon à conférer à la membrane, au moins provisoirement, des étirements locaux (29) plus ou moins importants en correspondance avec la situation et l'importance des creux de l'empreinte de moulage (2), puis, on effectue, le couvercle étant en place sur le moule, les étapes suivantes :

   - on supprime ledit vide et, simultanément, on applique un vide déterminé sur la face de la membrane (13) tournée vers le moule (1) et une pression d'une première valeur sur l'autre face,
   - ensuite, on injecte sous pression la résine dans le moule tout en maintenant celui-ci sous vide,
   - puis, dès remplissage en résine du moule, on isole ce dernier vis à vis de la résine et de la source de vide, et
   - enfin, on porte la pression régnant sur la face externe de la membrane (13) à une seconde valeur supérieure à la première, pendant un temps déterminé, à des fins de compactage final.

2. Procédé suivant la revendication 1, caractérisé en ce que, lors de l'injection de la résine, la pression exercée sur la face externe de la membrane (13) est augmentée d'une valeur correspondant à la pression d'injection (Pi) de la résine.

3. Procédé suivant la revendication 1 ou 2, caractérisé en ce que la mise en place des fibres dans le moule (1,2) consiste à confectionner dans l'empreinte de moulage (2) une pré-forme (26) de la pièce à obtenir, à l'aide de tissus superposés, liés entre eux et découpés aux dimensions de la pièce, les tranches du matelas de tissus ainsi obtenu étant recouvertes de couvre-joints (24,25).

4. Procédé suivant la revendication 3, caractérisé en ce que les tissus de la pré-forme (26) sont arasés à hauteur de listels (8,11) d'acheminement de la résine à hauteur du ou des bords de la pré-forme (26) et d'évacuation de la résine, lesdits listels et la ou les lisières de la pré-forme (26) étant recouverts par lesdits couvre-joints (24,25).

5. Procédé suivant l'une des revendications 1 à 4, caractérisé en ce que la résine est injectée en partie basse (8) de l'empreinte (2), le vide d'aspiration de la résine étant appliqué en partie haute (11).

6. Dispositif de moulage pour la mise en oeuvre du procédé selon l'une des revendications 1 à 5, comprenant un corps de moule (1,34) portant au moins un empreinte de moulage (2,35), un couvercle (6,32) de fermeture avec interposition d'une membrane (13,40), le corps de moule (1,34) étant pourvu de canaux d'injection de résine (7,36) dans ladite empreinte et d'aspiration (10,37) et le couvercle (6,32) étant muni d'au moins un canal (22,33) de communication avec l'extérieur, caractérisé en ce que la paroi interne du couvercle (6,32) est munie d'une ou plusieurs contre-formes (16;38,39) images de la ou des empreintes (2,35).

7. Dispositif suivant la revendication 6,caractérisé en ce que la ou les contre-formes (16;38,9) sont modifiables et/ou amovibles.

8. Dispositif suivant la revendication 6 ou 7, caractérisé en ce qu'il comporte des couvre-joints (24,25) recouvrant les lisières des pré-formes (26) et les éventuels listels (8,11) de liaison entre les canaux d'injection de résine (7,36) et d'aspiration (10,37) et les bords des empreintes de moulage (2,35).

9. Dispositif suivant l'une des revendications 6 à 8, caractérisé en ce que l'orifice interne dudit canal (22,33) de communication ménagé dans le couvercle (6,32) est recouvert d'un tissu de drainage du vide (23).

10. Dispositif suivant l'une des revendications 6 à 9, caractérisé en ce que la membrane (13,40) est un film d'une épaisseur de l'ordre de 50 à 75 micromètres et susceptible d'un allongement de l'ordre de 500 à 1000 %.

**Claims**

1. Method of fabricating low-pressure injected laminated parts, notably with deep dishes, in which there are placed superimposed layers of fabric or sheets (26) in a mould (1, 2), the mould is closed off by a flexible membrane (13) carried by a cover (6) for airtight closing of the mould, the membrane face facing the fibres being able to be subjected to a vacuum and the other face to a pressure, so as to press the membrane (13) against the fibres (26) in order to inject resin into the latter by means of the said vacuum, characterized in that, in advance, the membrane (13), preferably before the closure of the cover (6), is, on its face facing the latter, subjected to a vacuum pressing the membrane against a counter-form (16) so as to give the membrane, at least temporarily, local stretches (29), the sizes of which are in proportion to the location and size of the hollows in the moulding tool (2), and then, with the cover in place on the mould, the following steps are performed:

   - the said vacuum is removed and, at the same time, a given vacuum is applied to the face of the membrane (13) facing the mould (1) and a pressure of a first value is applied to the other face,

   - next, the resin is injected under pressure into the mould, while the latter is kept under a vacuum,

   - then, once the mould has been filled with resin, the mould is isolated from the resin and from the vacuum source, and

   - finally, the pressure to which the external face of the membrane (13) is subjected is brought to a second value higher than the first, for a given period of time, for the purpose of final compacting.

2. Method according to Claim 1, characterized in that, when resin is injected, the pressure exerted on the external face of the membrane (13) is increased by a value corresponding to the injection pressure (Pi) of the resin.

3. Method according to Claim 1 or 2, characterized in that the placing of fibres in the mould (1, 2) consists of constructing in the moulding tool (2) a pre-form (26) of the part to be obtained, by means of superimposed fabrics bound together and cut to the dimensions of the part, the edges of the mat of fabric thus obtained being covered with cappings (24, 25).

4. Method according to Claim 3, characterized in that the pre-form fabrics are flush on a level with ducts (8, 11) for the channelling of the resin at the edge or edges of the pre-form (26) and for the evacuation of the resin, the said ducts and the rim or rims of the pre-form (26) being covered by the said cappings (24, 25).

5. Method according to one of Claims 1 to 4, characterized in that the resin is injected in the low part (8) of the tool (2), the resin suction vacuum being applied in the upper part (11).

6. Moulding device for the implementation of the method according to one of Claims 1 to 5, comprising a mould body (1, 34) carrying at least one moulding tool (2, 35), and a closing cover (6, 32) with a membrane (13, 40) interposed, the mould body (1, 34) being provided with channels (7, 36) for injecting resin in the said tool and for suction (10, 37) and the cover (6, 32) being provided with at least one channel (22, 33) for communication with the outside, characterized in that the internal wall of the cover (6, 32) is provided with one or more counter-forms (16; 38, 39) which are images of the tool or tools (2, 35).

7. Device according to Claim 6, characterized in that the counter-forms (16; 38, 39) are modifiable and/or removable.

8. Device according to Claim 6 or 7, characterized in that it includes cappings (24, 25) covering the rims of the pre-forms (26) and any connecting ducts (8, 11) between the resin injection (7, 36) and suction (10, 37) channels and the edges of the moulding tools (2, 35).

9. Device according to one of Claims 6 to 8, characterized in that the internal orifice of the said communication channel (22, 33) formed in the cover (6, 32) is covered with a vacuum drainage fabric (23).

10. Device according to one of Claims 6 to 9, characterized in that the membrane (13, 40) is a film approximately 50 to 75 micrometers thick and able to stretch by around 500 to 1000%.

**Patentansprüche**

1. Verfahren zum Herstellen von mehrschichtigen, unter niedrigem Druck imprägnierten Gegenständen, insbesondere mit Überschneidungen, bei dem man Fasern in einer Form (1, 2) in übereinander angeordneten Schichten aus Gewebe oder Vlies (26) anordnet, die Form durch eine weiche Membran (13) verschließt, die von einem Deckel (6) zum dichten Verschließen der Form getragen wird, wobei die Stirnseite der Membran, die gegen die Fasern gerichtet ist, vakuum- und die andere Stirnseite druckbeaufschlagbar ist, so daß die Membran (13) gegen die Fasern (26) zur Anlage gebracht wird, um das Harz zwischen diese letzteren mittels des Vakuums zu injizieren, dadurch gekennzeichnet, daß vorab die Membran (13), vorzugsweise vor Schließen des Deckels (6), auf seiner Stirnseite, die gegen letzteren gerichtet ist, vakuumbeaufschlagt wird, wodurch die Membran an einer Gegenform (16) derart zur Anlage gebracht wird, daß der Membran wenigstens provisorisch lokale Aufdehnungen (29) verliehen werden, die entsprechend der Situation und der Bedeutung von Vertiefungen der Form (2) mehr oder weniger bedeutend sind, wonach man, wenn der Dekkel auf der Form angeordnet ist, folgende Schritte vornimmt:

- Man beseitigt das Vakuum und legt gleichzeitig ein vorbestimmtes Vakuum an die Stirnseite der Membran (13), die zur Form (1) gerichtet ist, und einen Druck eines ersten Wertes an die andere Stirnseite,
- danach injiziert man unter Druck das Harz in die Form, wobei diese weiter unter Vakuum gehalten wird,
- dann isoliert man nach Einfüllen des Harzes in die Form letztere gegenüber dem Harz und der Vakuumquelle, und
- schließlich bringt man den Druck, der an der Außenseite der Membran (13) herrscht, während einer vorbestimmten Zeit zum Abschließen der endgültigen Verdichtung auf einen zweiten Wert höher als der erste.

2. Verfahren nach Anspruch 1, dadurch gekennzeichnet, daß während des Injizierens des Harzes der auf die Außenfläche der Membran (13) ausgeübte Druck auf einen Wert entsprechend dem Injektionsdruck (Pi) des Harzes erhöht wird.

3. Verfahren nach Anspruch 1 oder 2, dadurch gekennzeichnet, daß das Anordnen der Fasern in der Form (1, 2) darin besteht, im Hohlraum der Form (2) eine Vorform (26) des zu erhaltenden Teils mittels übereinander angeordneter Gewebe zu bilden, die untereinander verbunden und auf die Dimensionen des Teils geschnitten sind, wobei die Ränder des so erhaltenen Gewebematerials von Deckstreifen (24, 25) abgedeckt werden.

4. Verfahren nach Anspruch 3, dadurch gekennzeichnet, daß die Gewebe der Vorform (26) auf der Höhe von Deckleisten (8, 11) zum Zuführen des Harzes auf der Höhe des oder der Ränder der Vorform (26) und zum Evakuieren des Harzes beschnitten sind, wobei die Deckleisten (8, 11) und der oder die Ränder der Vorform (26) durch die Deckstreifen (24, 25) bedeckt sind.

5. Verfahren nach einem der Ansprüche 1 bis 4, dadurch gekennzeichnet, daß das Harz in den unteren Teil (8) des Hohlraums (2) injiziert wird, während das Vakuum zum Ansaugen des Harzes am oberen Teil (11) angelegt wird.

6. Formeinrichtung zur Durchführung des Verfahrens nach einem der Ansprüche 1 bis 5, umfassend einen Formkörper (1, 34), der wenigstens eine Formhohlraum (2, 35) und einen Deckel (6, 32) zum Verschließen unter Zwischenschalten einer Membran (13, 40) besitzt, wobei der Formkörper (1, 34) mit einem Kanal zum Injizieren für Harz in den Hohlraum (7, 36) und zum Ansaugen (10, 37) versehen ist und der Deckel (6, 32) mit wenigstens einem Verbindungskanal (22, 33) zum Außenraum ausgerüstet ist, dadurch gekennzeichnet, daß die Innenwand des Deckels (6, 32) mit einer oder mehreren Gegenformen (16; 38, 39) als Abbild des oder der Hohlräume (2, 35) versehen ist.

7. Einrichtung nach Anspruch 6, dadurch gekennzeichnet, daß die Gegenform(en) (16; 38, 39) modifizierbar und/oder abnehmbar sind.

8. Einrichtung nach Anspruch 6 oder 7, dadurch gekennzeichnet, daß sie Deckstreifen (24, 25) umfaßt, die die Kanten der Vorform (26) und die eventuellen Deckleisten (8, 11) zum Verbinden zwischen den Kanälen zum Injizieren von Harz (7, 36) und Ansaugen (10, 37) und die Ränder der Formhohlräume (2, 35) bedecken.

9. Einrichtung nach einem der Ansprüche 6 bis 8, dadurch gekennzeichnet, daß die innere Mündung des im Deckel (6, 32) angebrachten Verbindungskanals (22, 33) von einem Vakuumdrainagegewebe (23) bedeckt ist.

10. Einrichtung nach einem der Ansprüche 6 bis 9, dadurch gekennzeichnet, daß die Membran (13, 40) ein Film einer Stärke in der Größenordnung von 50 bis 75 μm und größenordnungsmäßig um 500 bis 1000 % dehnbar ist.

EP 0 659 541 B1

FIG 1

9

FIG 2

FIG 3

FIG 4

FIG 5

FIG 6

FIG 7

FIG 8

FIG 9

EP 0 659 541 B1